# EUROPÄISCHE PATENTSCHRIFT

(11) **EP 2 799 811 B1**
(45) Veröffentlichungstag und Bekanntmachung des Hinweises auf die Patenterteilung: **30.05.2018**
(21) Anmeldenummer: 14001355.8
(22) Anmeldetag: 14.04.2014
(51) Int. Cl.: G01B 21/04, B23Q 17/24, G01B 11/02

(54) **Verfahren zum Vermessen von auf einem Schneidenträger angeordneten Schneiden und Vorrichtung hierzu**
Method for measuring cutters arranged on a cutter support and device for the same
Procédé destiné à mesurer les plaquettes agencées sur un porte-plaquette et dispositif associé

(30) Priorität: 03.05.2013 DE 102013007611
(43) Veröffentlichungstag der Anmeldung: 05.11.2014
(73) Patentinhaber: VOLLMER WERKE Maschinenfabrik GmbH, 88400 Biberach/Riss (DE)
(72) Erfinder: Bodenmüller, Franz, 88477 Schwendi (DE)
(74) Vertreter: Thum, Bernhard

(56) Entgegenhaltungen:
- CN-A- 101 995 231
- DE-A1- 10 016 785
- US-A- 6 064 759
- US-A1- 2006 026 852
- US-A1- 2008 175 679
- US-A1- 2012 209 553

## Beschreibung

Die Erfindung betrifft ein Verfahren und eine Vorrichtung zum Erfassen von Geometriedaten von auf einem Schneidenträger angeordneten Schneiden eines Bearbeitungswerkzeugs, wobei die Geometriedaten zur Schneidenbearbeitung, insbesondere zum Schärfen der Schneiden, verwendet werden, wobei der Schneidenträger eine Rotationsachse aufweist, um die der Schneidenträger zur Bearbeitung von Werkstücken drehantreibbar ist, wobei an einem Umfangsbereich des Schneidenträgers eine Mehrzahl von im wesentlichen planaren Schneiden angebracht ist, die von dem Schneidenträger in radialer oder/und axialer Richtung vorstehen und jeweils eine nach radial außen oder/und nach axial weisende Freifläche aufweisen, die von einer Schneidkante begrenzt ist, wobei die Schneidkanten der Schneiden eine gemeinsame, vorzugsweise rotationssymmetrische, den Schneidenträger umhüllende Mantelfläche definieren, wobei die umhüllende Mantelfläche in einer die Rotationsachse des Schneidenträgers enthaltenden Schnittebene eine Soll-Konturkurve abbildet. US 2008/0175679 A1 offenbart ein Werkzeug mit einem Schneidenträger und darauf angeordneten Schneiden. Werkzeuge mit Schneidenträger der vorstehend beschriebenen Art, auf denen Schneiden vorgesehen sind, sind im Stand der Technik bereits bekannt. So werden diese beispielsweise in Form von Schaftwerkzeugen hergestellt, wobei in den Schaft des Werkzeugs einzelne Schneiden aus besonders verschleißfesten Materialien, wie beispielsweise sogenannte PKD-Schneiden (Schneiden aus polykristallinem Diamantwerkstoff) oder dergleichen, eingelegt werden. Die Schneiden selbst sind in Form planarer Plättchen oder Platten ausgebildet und werden in entsprechenden Ausnehmungen oder Taschen am Schneidenträger angebracht. Die Befestigung dieser Schneiden kann entweder durch mechanisches Verspannen oder aber auch durch ein Fügeverfahren erfolgen, wie beispielsweise durch Hartlöten der Schneiden in den Ausnehmungen des Schneidenträgers. Je nach Art des Werkzeugs stehen die Schneiden in axialer Richtung, d.h. stirnseitig nach vorne, oder in radialer Richtung von dem Schneidenträger vor, oder erstrecken sich ausgehend von dem Schneidenträger so, dass sie sowohl in axialer Richtung als auch in radialer Richtung über den Schneidenträger hinaus stehen und teilweise um diesen umlaufend eine Schneidkante darbieten.
Wenngleich die Anbringung der Schneiden am Schneidenträger unter Einhaltung gewisser Toleranzen möglich ist, kommt es fertigungsbedingt immer zu gewissen Abweichungen der tatsächlichen Schneidenlage von ihrer Solllage. Dies rührt beispielsweise daher, dass die Ausnehmungen mit Toleranzen am Schneidenträger angebracht sind oder dass sich beim Festlöten der einzelnen Schneiden unterschiedliche Lotmengen in den Ausnehmungen des Schneidenträgers befinden und so die Lage sowie die Neigung einzelner Schneiden relativ zum Schneidenträger variieren kann.

Die vorstehend geschilderten Toleranzen hinsichtlich der Positionierung und Ausrichtung einzelner Schneiden auf einem solchen Schneidenträger aber auch die selbst bei harten und verschleißfesten Schneidenmaterialien nach einiger Bearbeitungszeit auftretenden Verschleißerscheinungen machen es erforderlich, die Freiflächen der einzelnen Schneiden eines solchen Werkzeugs erstmals nach dessen Herstellung sowie von Zeit zu Zeit zum Verschleißausgleich zu bearbeiten. Dabei sollten die Schneidkanten der einzelnen Schneiden auf einer gemeinsamen den Schneidenträger umhüllenden Mantelfläche liegen, die vorzugsweise rotationssymmetrisch, insbesondere zylindrisch, tonnenförmig, kegelstumpfförmig oder mit anderweitiger beliebiger rotationssymmetrischer Mantelfläche geformt sein kann, um später mit dem einmal bearbeiteten oder geschärften Werkzeug entsprechend hochwertige Bearbeitungsergebnisse in einem mit diesem Werkzeug zu bearbeitenden Werkstück zu erzielen. Die umhüllende Mantelfläche wird durch eine Soll-Konturkurve definiert, die das Profil im später bearbeiteten Material repräsentiert. Diese ergibt sich bei korrekt bearbeitetem Werkzeug, wenn eine die Rotationsachse des Werkzeugs und des Schneidenträgers enthaltende Schnittebene die umhüllende Mantelfläche schneidet. Die umhüllende Mantelfläche wird also so gewählt, dass im später bearbeiteten Werkstück gemäß der Soll-Konturkurve das gewünschte Bearbeitungsprofil entsteht.

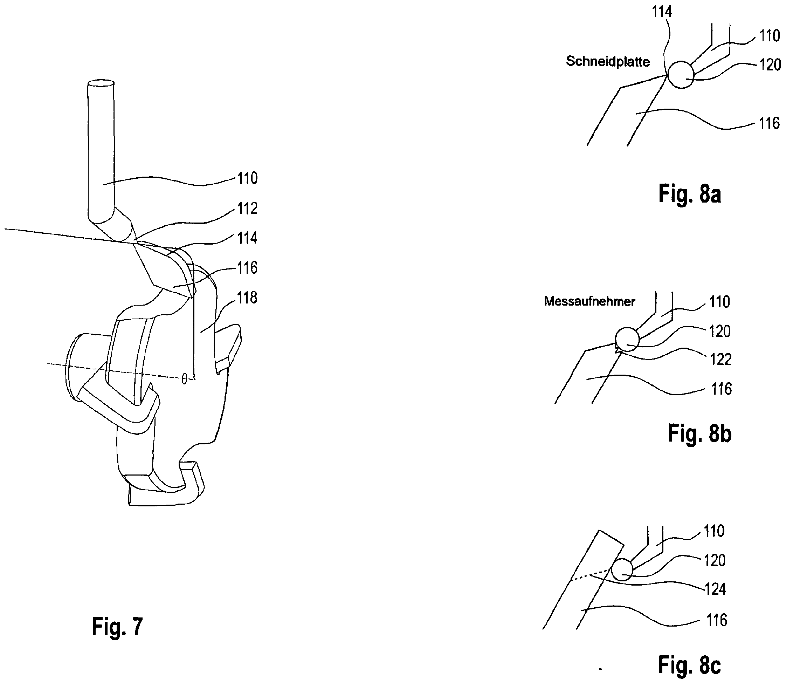

Für die messtechnische Erfassung der Lage und Kontur einzelner Schneiden ist es im Stand der Technik üblich, die Schneide unmittelbar oder so nah wie möglich an der Schneidkantenkontur abzutasten. Dies ist in Figur 7 und in Figur 8a gezeigt. Hierzu wird beispielsweise mit einem mit einer Spitze 112 ausgebildeten Messaufnehmer 110 versucht, die Schneidkantenkontur 114 einer Schneide 116 "abzufahren", die an einem Schneidenträger 118 angebracht ist. Diese Vorgehensweise mag bei unversehrten Schneidplatten bzw. Schneiden zweckmäßig sein, wie dies etwa in Figur 8a gezeigt ist, dort allerdings für einen Messtaster 110 mit einer Messkugel 120, was gegenüber der Verwendung einer Messspitze hinsichtlich der Anfälligkeit für Messfehler vorteilhafter sein kann. Es hat sich aber gezeigt, dass gerade dann, wenn eine Schneide bereits benutzt wurde und lokale Fehlerstellen, etwa Ausbrüche oder dergleichen, aufweist, wie etwa in der Darstellung gemäß Figur 8b mit dem Ausbruch 122 gezeigt, oder wenn eine Schneide erstmals zu bearbeiten ist, wie etwa in der Darstellung gemäß Figur 8c gezeigt, und noch eine undefinierte Schneidkante 124 aufweist, ein derartiges unmittelbares Abtasten der Schneidkantenkontur - selbst bei Verwendung einer Messkugel - Messfehler zur Folge hat, die dann bei der Bearbeitung der Schneide in der Folge zu keinem zufriedenstellenden Bearbeitungsergebnis führen. Derartige Messfehler sind bei der üblicherweise verwendeten Messkugel noch größer.

Dazu kommt, dass der Abtastvorgang selbst in der Regel mit einer verhältnismäßig aufwändigen CNC-gesteuerten Maschinenkinematik ausgeführt werden muss, insbesondere bei komplexen Werkzeugen. Dabei besteht die Schwierigkeit darin, den Messaufnehmer präzise an die Schneide heranzuführen. Dies kann beispielsweise dadurch erfolgen, dass der Messaufnehmer an einer bestimmten Position der umhüllenden Mantelfläche positioniert wird und dann das Werkzeug um seine Rotationsachse derart gedreht wird, bis die zu vermessende Schneide in Kontakt mit dem Messaufnehmer gelangt. Dieses Verfahren ist aber nur beschränkt einsetzbar und hat praktische Grenzen, insbesondere in Situationen, bei denen die Schneide auch eine Schneidenkontur an der Stirnseite des Bearbeitungswerkzeugs aufweist oder/und verhältnismäßig stark relativ zum Zentrum mit Distanz zur Mittelachse radial versetzt ist. In einer solchen Situation kann durch eine rotative Bewegung des Werkzeuges kein definierter Kollisionspunkt der Schneidkante zum Messaufnehmer gefunden werden, wodurch diese Vorgehensweise in solchen Fällen nicht zielführend ist. Ferner sei angemerkt, dass dieses herkömmliche Verfahren relativ zeitintensiv ist, weil eine Vielzahl von Messpunkten über den Messaufnehmer erfasst werden muss.

Es ist eine Aufgabe der vorliegenden Erfindung, ein Verfahren der eingangs bezeichneten Art bereitzustellen, mit dem zuverlässig, exakt und unter geringem Messaufwand Geometriedaten zu den auf einem Schneidenträger angeordneten Schneiden eines Bearbeitungswerkzeugs erfasst und zur späteren Schneidenbearbeitung verwendet werden können.

Diese Aufgabe wird durch ein Verfahren zum Erfassen von Geometriedaten von auf einem Schneidenträger angeordneten Schneiden eines Bearbeitungswerkzeugs gelöst, wobei die Geometriedaten zur Schneidenbearbeitung, insbesondere zum Schärfen der Schneiden verwendet werden, wobei der Schneidenträger eine Rotationsachse aufweist, um die der Schneidenträger zur Bearbeitung von Werkstücken drehantreibbar ist, wobei an einem Umfangsbereich des Schneidenträgers eine Mehrzahl von im wesentlichen planaren Schneiden angebracht ist, die von dem Schneidenträger in radialer oder/und axialer Richtung vorstehen und jeweils eine nach radial außen oder/und axial weisende Freifläche aufweisen, die von einer Schneidkante begrenzt ist,
wobei die Schneidkanten der Schneiden eine gemeinsame, vorzugsweise rotationssymmetrische, den Schneidenträger umhüllende Mantelfläche definieren, wobei die umhüllende Mantelfläche in einer die Rotationsachse des Schneidenträgers enthaltenden Schnittebene eine Soll-Konturkurve abbildet, umfassend die Schritte:
A) Bestimmen wenigstens dreier Oberflächenpunkte auf der im wesentlichen planaren Oberfläche einer zu erfassenden Schneide, wobei die Oberflächenpunkte nicht auf einer gemeinsamen Gerade liegen;
B) Ermitteln einer Schneidenebene aus den in Schritt A) ermittelten wenigstens drei Oberflächenpunkten; und
C) Berechnen des Verlaufs der Schneidkante entlang der in Schritt B) ermittelten Schneidenebene unter Berücksichtigung der Soll-Konturkurve.

Erfindungsgemäß wird in Schritt A) also lediglich eine geringe Anzahl von Oberflächenpunkten, d. h. mindestens drei Oberflächenpunkte, auf der Schneide erfasst, wobei diese wenigstens drei Oberflächenpunkte nicht auf einer gemeinsamen Gerade liegen dürfen. Diese drei Oberflächenpunkte liegen auch nicht auf der Schneidkante, weil dort die Messung schwierig und fehleranfällig ist. Die wenigstens drei Oberflächenpunkte auf der Schneide bestimmen die Lage einer tatsächlichen oder zumindest virtuellen Schneidenebene im Raum bezüglich des Schneidenträgers und seiner Rotationsachse, die in Schritt B) mathematisch ermittelt wird. Dabei werden auch Toleranzen ermittelt, mit denen die aktuell vermessene Schneide in den Schneidenträger eingesetzt und in diesem fixiert ist und um die die Schneide von ihrer idealen Lage im Schneidenträger abweicht. Schließlich wird aus der vorgegebenen Soll-Konturkurve, die letztendlich die Geometrie eines Werkstücks bestimmt, das mit dem Bearbeitungswerkzeug bearbeitet werden soll, mathematisch der Verlauf der Schneidkante bestimmt. Dies kann in einer Weiterbildung der Erfindung, wie im Folgenden noch im Detail erläutert werden wird, in zwei verschiedenen Modi geschehen.

Das erfindungsgemäße Verfahren beschränkt sich also auf wenige tatsächlich an der zu bearbeitenden Schneide am Werkzeug durchgeführten Messungen, mit denen die Oberflächenpunkte erfasst werden, und kann damit in zeitsparender Weise durchgeführt werden. Die weiteren Schritte, die zur Bestimmung der Lage der Schneide relativ zum Schneidenträger und des Verlaufs der Schneidkante der in ihrer Ebene anhand der gemessenen Oberflächenpunkte lagedefinierten Schneide erforderlich sind, werden dann je nach Soll-Konturkurve des mit dem des Bearbeitungswerkzeug späteren Werkstück zu erzielenden Bearbeitungsergebnisses mathematisch durchgeführt.

Erfindungsgemäß kann vorgesehen sein, dass in Schritt A) die wenigstens drei Oberflächenpunkte taktil oder optisch erfasst werden. Die Erfassung muss nicht, wie beim Stand der Technik, mit einer möglichst idealen Messspitze ausgeführt werden, die in der Praxis relativ empfindlich ist. Vielmehr kann zur Erfassung der Oberflächenpunkte ein deutlich weniger empfindlicher und einfacher handhabbarer kugelförmiger Messaufnehmer verwendet werden, wobei sich mit der Messkugel aufgrund des definierten mathematischen Sachverhalts der Kugelgeometrie, im Zusammenhang mit der virtuellen Messfläche, die sich im Kugelzentrum abbildet, die Schneidenoberfläche einfach berechnen lässt. Die Berührpunkte der Messkugel mit der Schneidenoberfläche müssen dabei nicht explizit berechnet werden, sondern lassen sich unter Berücksichtigung des Kugelradius einfach ermitteln. Es versteht sich, wie nachfolgend noch im Detail erläutert werden wird, dass zusätzlich zu den mindestens drei Oberflächenpunkten weitere Oberflächenpunkte erfasst werden können, beispielsweise um die Messung zu verifizieren oder um Unregelmäßigkeiten oder eine Wölbung der Schneide zu erfassen.

Eine Weiterbildung der Erfindung sieht vor, dass zu der in Schritt B) ermittelten Schneidenebene relativ zu wenigstens einem der Oberflächenpunkte ein Normalenvektor ermittelt wird. Dabei kann vorgesehen sein, dass anhand des Normalenvektors Schneideninformationen bestimmbar sind, insbesondere die Lage einer Spanfläche (Brust) der Schneide, die Lage des Rückens der Schneide, die Gültigkeit der in Schritt A) ermittelten Oberflächenpunkte zur Verwendung bei der weiteren Ermittlung des Verlaufs der Schneidenkontur, oder ein Längenabschnitt auf der Soll-Konturkurve bzw. der Schneidkante. So ist es beispielsweise möglich, durch die Reihenfolge der Oberflächenpunkte über das mathematische Vektorprodukt die Richtung des Normalenvektors der Schneidenebene eindeutig zu definieren. Dadurch kann der Schneide allein über den Normalenvektor eindeutig die Lage der Schneiden-Spanfläche oder des Schneiden-Rückens (Freifläche) zugeordnet werden. Der Betrag des Normalenvektors steht in Zusammenhang mit dem eingeschlossenen Flächeninhalt des durch die erfassten Oberflächenpunkte aufgespannten Dreiecks. Dieser Flächeninhalt erlaubt es wiederum, die Gültigkeit der Messung zu verifizieren, denn die erfassten Oberflächenpunkten dürfen nicht entlang einer Geraden liegen.

Vorzugsweise ist vorgesehen, dass die Soll-Konturkurve in Form von CAD-Bearbeitungsdaten vorliegt, die durch das im später bearbeiteten Werkstück zu erzielende Bearbeitungsprofil vorgegeben sind. Diese CAD-Bearbeitungsdaten können dann mathematisch zur Bestimmung der Schneidenkontur weiterverarbeitet werden. Gleichsam kann die durch die Soll-Konturkurve vorgegebene umhüllende Mantelfläche in Form von CAD-Bearbeitungsdaten vorliegen.

Wie eingangs bereits angedeutet, sieht das erfindungsgemäße Verfahren zwei verschiedene Modi vor, die in Abhängigkeit davon eingesetzt werden, ob eine Ermittlung der Schneidenkontur relativ einfach möglich ist, weil der aktuell ermittelte Schneidenkonturbereich beispielsweise in hinreichendem radialem Abstand von der Rotationsachse radial außerhalb von dieser liegt, beispielsweise radial außerhalb eines vorbestimmten Grenzpunktes, oder ob ein Schneidenkonturbereich zu ermitteln ist, der etwa in einem zentrumsnahen Stirnbereich des Bearbeitungswerkzeuges liegt, wo eine schwer zu erfassende undefinierte Zone vorliegt. Der Grenzpunkt kann so gewählt sein, dass radial außerhalb von diesem eine Ermittlung der Schneidenkontur mit dem unten erwähnten "Abwicklungsmodus" in jedem Fall zuverlässig möglich ist. Besonders schwierig kann eine Erfassung eines Schneidenkonturbereichs sein, der relativ nah an der Rotationsachse des Schneidenträgers liegt und relativ zu dieser auch noch seitlich, d.h. in radialer Richtung versetzt ist. In diesem Zusammenhang spricht man auch von "Mittenversatz" des Schneidenkonturbereichs.

Der erste Modus, auch als "Abwicklungsmodus" bezeichnet, sieht in einer Weiterbildung des erfindungsgemäßen Verfahrens den folgenden Schritt vor:
Bestimmen des Verlaufs der Schneidkante in Schritt C) dadurch, dass die Schneidenebene mit der umhüllende Mantelfläche geschnitten wird, wobei die Schnittlinie zum Ermitteln der Schneidkante verwendet wird.

Sofern der Abwicklungsmodus nicht zu einer präzisen Ermittlung der Schneidkante führt, beispielsweise dann, wenn der zu ermittelnde Schneidenkonturbereich stirnseitig mit geringem radialen Abstand zu der Rotationsachse des Werkzeugs liegt, kann gemäß einer Weiterbildung der Erfindung das erfindungsgemäße Verfahren in einem zweiten Modus, dem so genannten "Stirnmodus" ausgeführt werden. Dieser zeichnet sich in einer ersten Variante des erfindungsgemäßen Verfahrens durch die folgenden weiteren Schritte aus:
D) Bestimmen eines virtuellen Hilfsvektors an einem vorbestimmten virtuellen Bearbeitungspunkt der Soll-Konturkurve, wobei der virtuelle Hilfsvektor von dem vorbestimmten virtuellen Bearbeitungspunkt der Soll-Konturkurve ausgehend orthogonal zur Rotationsachse ausgerichtet ist,
E) Drehen des virtuellen Hilfsvektors derart, dass der virtuelle Bearbeitungspunkt der gedrehten Soll-Konturkurve auf der virtuellen Schneidenebene liegt,
F) Bestimmen einer virtuellen Konstruktionsfläche orthogonal zu dem gedrehten virtuellen Hilfsvektor in dem virtuellen Bearbeitungspunkt der gedrehten Soll-Konturkurve auf der virtuellen Schneidenebene,
G) Bestimmen einer Schnittgeraden zwischen der in Schritt B) bestimmten Schneidenebene und der in Schritt F) bestimmten virtuellen Konstruktionsfläche, und
H) Ermitteln eines aktuellen Bearbeitungspunktes auf der Schnittgeraden anhand eines ausgewählten Koordinatenwertes der gedrehten Sollkonturkurve.

Insbesondere kann in diesem Zusammenhang vorgesehen sein, dass die folgenden weiteren Schritte eingesetzt werden:
I) Ermitteln weiterer Punkte der Schneidkante durch virtuelles Verlagern der virtuellen Konstruktionsebene entlang des gedrehten virtuellen Hilfsvektors, wobei nach einer virtuellen Verlagerung die Schritte durchgeführt werden:
J) Bestimmen einer Schnittgeraden zwischen der in Schritt B) bestimmten Schneidenebene und der verlagerten virtuellen Konstruktionsfläche,
K) Ermitteln eines aktuellen Bearbeitungspunktes auf der Schnittgeraden anhand eines ausgewählten Koordinatenwertes der gedrehten Sollkonturkurve.

Dabei kann der ausgewählte Koordinatenwert etwa ein bestimmter Koordinatenwert der Soll-Konturkurve sein. Es bietet sich an, hier einen X-Wert der Soll-Konturkurve zu wählen, wobei die Richtung der X-Achse mit der Richtung der Rotationsachse des Werkzeugs zusammenfällt. Der Betrag der virtuellen Verlagerung der virtuellen Konstruktionsebene entlang des Normalenvektors oder entlang der Sollkonturkurve, was als Parallelverschiebung der virtuellen Konstruktionsebene zu verstehen ist, wird durch den jeweiligen Y-Wert der Soll-Konturkurve bestimmt. Die Ordinate (Y-Achse) der Soll-Konturkurve ist dabei durch den Normalenvektor bestimmt, die Abszisse (X-Achse) durch die Rotationsachse des Werkzeugs.

Um zu differenzieren, wann der Stirnmodus und wann der Abwicklungsmodus eingesetzt wird, sieht eine Weiterbildung der Erfindung vor, dass die Schritte D) bis G) und insbesondere die Schritte D) bis K) bei Unterschreiten eines vorbestimmten radialen Abstandes des Schnittpunktes oder der Schnittpunkte von der Rotationsachse angewandt werden. Der vorbestimmte radiale Abstand bestimmt den vorstehend erwähnten vorbestimmten Grenzpunkt. Dieser ist ein mögliches Indiz dafür, dass ein Schneidenkonturbereich erfasst werden soll, der im Stirnbereich des Bearbeitungswerkzeuges liegt und mit dem Abwicklungsmodus nicht mehr erfassbar ist, beispielsweise aufgrund seines Mittenversatzes oder seiner Nähe zur Rotationsachse des Werkzeugs. Bei dem vorbestimmten radialen Abstand kann es sich beispielsweise um den Durchmesser des Schneidenträgers oder ein anderes vorbestimmtes Maß handeln, das zum Wechseln zwischen Abwicklungsmodus und Stirnmodus verwendet wird. Wird also der vorbestimmte radiale Abstand des Schnittpunktes oder der Schnittpunkte zur Ermittlung der Schneidenkontur von der Rotationsachse unterschritten, so handelt es sich bei dem ermittelten Schnittpunkt des aktuell zu erfassenden Schneidenkonturbereichs um einen zentrumsnahen Konturpunkt der Schneide im Bereich der Stirnfläche des Bearbeitungswerkzeuges, in dem die Schneidenkontur aufwändiger zu ermitteln ist, als im einfacheren Abwicklungsmodus.

Wie vorstehend erwähnt, kann erfindungsgemäß vorgesehen sein, dass eine Vielzahl von Oberflächenpunkten ermittelt wird, wobei die Oberflächenpunkte beispielsweise in Form eines Messbandes oder eines Fächers auf der Schneidenoberfläche angeordnet sind. Einzelne Oberflächenpunkte können auch zusätzlich zu bereits taktil oder optisch erfassten Oberflächenpunkten mathematisch berechnet werden.

Grundsätzlich ist es möglich, die Oberflächenpunkte beliebig zu wählen. Alternativ kann es von Vorteil sein, ganz bestimmte Oberflächenpunkte in einer bestimmten geometrischen Konstellation zueinander zu erfassen. In diesem Zusammenhang kann mit dem erfindungsgemäßen Verfahren vorgesehen sein, dass zunächst zwei Oberflächenpunkte ermittelt bzw. gemessen werden, wobei ein dritter Oberflächenpunkt zwischen den zwei erfassten Oberflächenpunkten auf einer winkelhalbierenden Ebene zur Rotationsachse erfasst bzw. berechnet wird. Dadurch kann beispielsweise eine Kompatibilität zu herkömmlichen Messverfahren erreicht werden, um so das erfindungsgemäße Verfahren in eine bestehende Bearbeitungsmaschine nachträglich zu integrieren, ohne wesentliche Bedienungsmodi zu verändern. Der Vorteil des erfindungsgemäßen Verfahrens liegt darin, dass es wesentlich präziser den Verlauf der Schneidenkontur berechnen lässt, als dies mit linearer Interpolation zwischen zwei tatsächlich taktilen Messpunkten bei den herkömmlichen Verfahren möglich ist.

Eine Weiterbildung des erfindungsgemäßen Verfahrens sieht vor, dass bei einer Erfassung von mehr als drei Oberflächenpunkten einzelne Oberflächenpunkte oder jeder weitere Oberflächenpunkt einer Verifizierung unterzogen werden bzw. wird. Alternativ ist es in diesem Zusammenhang möglich, dass bei einer Erfassung von mehr als drei Oberflächenpunkten eine Schneidenwölbung bestimmbar ist. Eine Schneidenwölbung kann beispielsweise gewünscht oder in Folge eines nicht optimal verlaufenen Fixierungsprozesses, beispielsweise beim Einlöten, entstanden sein.

Schließlich betrifft die Erfindung eine computergesteuerte Bearbeitungsvorrichtung, insbesondere eine Mehrachsbearbeitungsmaschine, bei der das erfindungsgemäße Verfahren in der Steuerungslogik bzw. Regelungslogik implementiert ist. Vorzugsweise ist eine Steuerungssoftware mit einer entsprechenden graphischen Bedienungsoberfläche vorgesehen, die die einzelnen Verfahrensschritte gemäß vorstehender Beschreibung vorsieht.

Die Erfindung zeichnet sich insbesondere durch die folgenden Vorteile aus:
- Anders als beim Stand der Technik reicht es aus, nur wenige Oberflächenpunkte taktil oder optisch zu erfassen, was zu einer verhältnismäßig schnell durchführbaren Messung führt.
- Durch das erfindungsgemäße Verfahren kann die Lage der Schneidplatte relativ einfach und dennoch präzise definiert werden. Die axiale und radiale Ausrichtung der Schneidplatte relativ zum Schneidenträger und zu dessen Rotationsachse sind relativ schnell erfassbar und können im weiteren Verfahren mathematisch verwertet werden. Dadurch lassen sich präzisere Geometriedaten zu der Schneidenkontur ermitteln.
- Die Grundlage für die messtechnische Erfassung gemäß dem vorliegenden Verfahren ist die Bestimmung der Lage der Schneidenebene im Raum. Anders als im Stand der Technik muss daher nicht die Schneidenkontur erfasst werden, wodurch Konturfehler, wie etwa Ausbrüche oder dergleichen, messtechnisch ohne Relevanz bleiben.
- Die aus dem Stand der Technik bekannten, vorstehend angedeuteten Probleme bei der Ermittlung der Schneidenkontur über eine geeignete Ansteuerung der CNC-Kinematik lassen sich mit der vorliegenden Erfindung einfach umgehen. Es ist mit dem erfindungsgemäßen Verfahren nicht mehr erforderlich, auch in mit einem Messaufnehmer schwer zu erreichenden Konturbereichen taktil zu messen.
- Gerade wegen der Tatsache, dass gemäß dem erfindungsgemäßen Verfahren nicht mehr die Schneidenkontur präzise abgefahren werden muss, sondern lediglich die Schneidenebene lagemäßig zu erfassen ist und die weiteren Schritte mathematisch durchgeführt werden, kann auf einen empfindlichen Messaufnehmer mit einer präzise ausgebildeten Messspitze verzichtet werden. Stattdessen kann ein Messaufnehmer mit einer Messkugel verwendet werden.
- Die Verwendung einer Messkugel bietet darüber hinaus eine präzise Kompensationsmöglichkeit. Abhängig von der Ausrichtung der Schneidplatte in axialer oder radialer Richtung ergeben sich unterschiedliche Berührpunkte zwischen der Messkugel und der Schneidplattenebene. Unter Berücksichtigung des Kugelradius lässt sich dies einfach kompensieren.
- Ist für ein bestimmtes Bearbeitungswerkzeug einmal die Lage der jeweiligen Schneide bzw. Schneidplatte bestimmt, so lassen sich diese Geometriedaten auch dann verwenden, wenn sich beispielsweise die umhüllende Mantelfläche des Bearbeitungswerkzeuges ändert, beispielsweise um dieses für einen anderen Bearbeitungsvorgang vorzubereiten oder weil das Bearbeitungswerkzeug bereits verschlissen ist und in Folge eines Nachschärfens in seiner Außenkontur verändert wird.

Die Erfindung wird im Folgenden beispielhaft anhand der beiliegenden Figuren erläutert. Es stellen dar:
- Fig. 1: eine schematische Darstellung einer Bearbeitungssituation eines Werkstücks mit einem Werkzeug, bei dem an einem Schneidenträger mehrere Schneiden angebracht sind;
- Fig.2: eine Darstellung zur Erläuterung, wie bei dem Werkzeug gemäß Figur 1 eine Schneide nach dem erfindungsgemäßen Verfahren abgetastet wird;
- Fig. 3a - 3d: verschiedene Darstellungen zur Erläuterung der Bestimmung von Oberflächenpunkten auf einer Schneidplatte;
- Fig. 4a - 4c: verschiedene Darstellungen zur Erläuterung des erfindungsgemäßen Verfahrens im "Abwicklungsmodus";
- Fig. 5a - 5c: verschiedene Darstellungen zur Erläuterung des erfindungsgemäßen Verfahrens im "Stirnmodus";

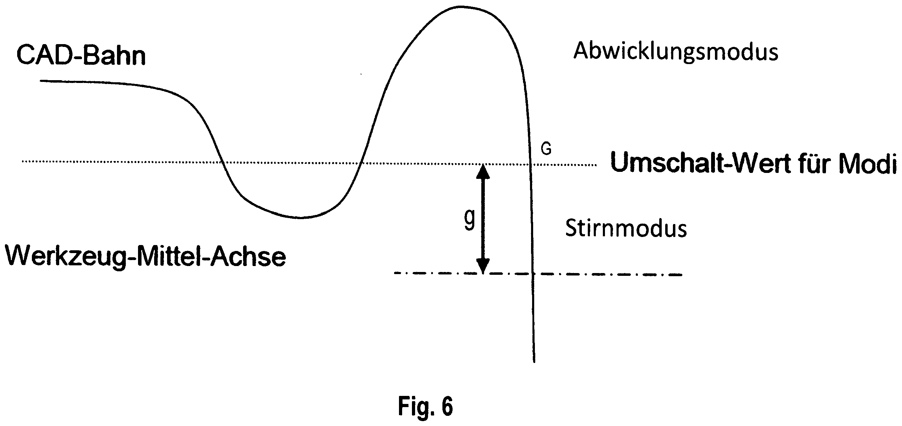

- Fig.6: eine Darstellung zur Erläuterung des Übergangs zwischen dem Abwicklungsmodus und Stirnmodus gemäß der vorliegenden Erfindung in Abhängigkeit vom axialen Abstand des aktuellen Bearbeitungspunktes;
- Fig. 7: eine Darstellung zur Erläuterung der Abtastung der Schneidkante gemäß dem Stand der Technik, und
- Fig. 8a - 8c: Darstellungen zur Erläuterungen der Probleme bei Messverfahren aus dem Stand der Technik.

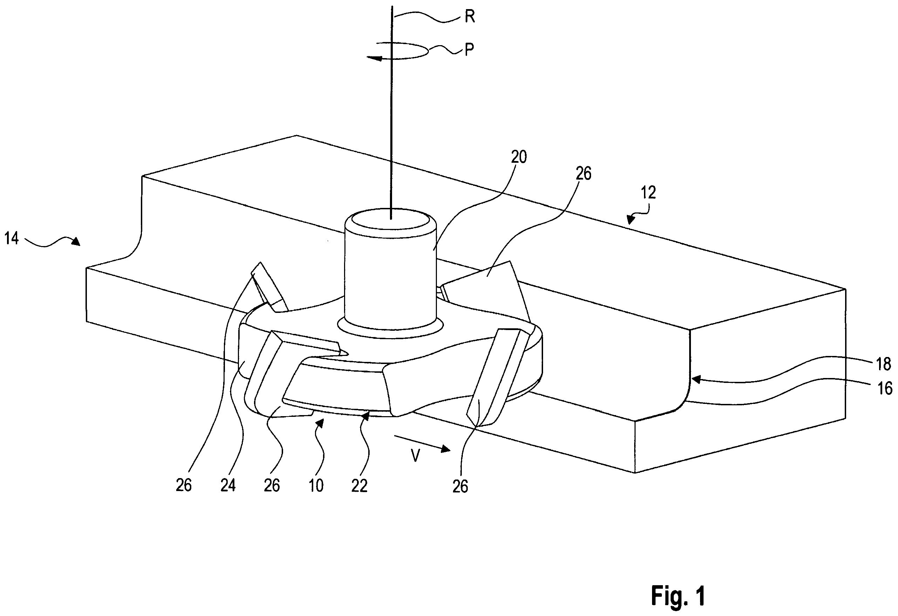

In Figur 1 ist schematisch eine Bearbeitungssituation gezeigt, bei der mit einem Werkzeug 10 ein Werkstück 12 bearbeitet wird. Das Werkstück 12 ist im wesentlichen quaderförmig ausgebildet und wird in einem Stirnbereich 14 spanabhebend derart mit dem Werkzeug 10 bearbeitet, dass im Querschnitt eine mit einem gerundeten Übergang 16 versehene Sollkonturkurve 18 erzielt wird. Durch Bewegen des Werkzeugs 10 entlang der Vorschubrichtung V und gleichzeitigem Drehantreiben des Werkzeugs 10 um seine Drehachse R entsprechend dem Pfeil P kann eine derartige spnabhebende Bearbeitung des Werkstücks 12 erreicht werden.

Bei dem Werkzeug 10 handelt es sich um einen Fräskopf, der einen Schaft 20 aufweist, mit dem das Werkzeug 10 in eine nicht gezeigte Werkzeugmaschine eingespannt und entsprechend drehangetrieben werden kann. Der Werkzeugschaft 20 ist mit einem Schneidenträger 22 fest verbunden. Der Schneidenträger 22 ist im wesentlichen scheibenförmig ausgebildet und weist an seinem Umfangsbereich vier in regelmäßigen Winkelabständen vorgesehene Ausnehmungen 24 auf. In diesen Ausnehmungen sind aus einem harten und verschleißfesten polykristalliner Diamantwerkstoff hergestellte Schneiden 26 angebracht. Die Anbringung erfolgt durch Vorpositionieren der Schneiden 26 und Einlöten beispielsweise durch ein Hartlötverfahren.

Obgleich der Schneidenträger 22 durch seine Geometrie im Rahmen bestimmter Toleranzen bereits relativ genau die Position der Schneiden 26 vorgibt, birgt das Einlöten der Schneiden 26 das Risiko von zum Teil wesentlichen Abweichungen der Schneiden 26 von ihrer Sollposition, beispielsweise weil sich zwischen den Schneiden 26 und den zugeordneten Kontaktflächen des Schneidenträgers 22 unterschiedliche Mengen an Lotmaterial sammeln. Als Ergebnis sind die Schneiden 26 nicht zwingend in ihrer Sollposition am Schneidenträger 22 angebracht, sondern mit mehr oder weniger großer Abweichung von dieser Sollposition. Um dennoch eine hochwertige Bearbeitung des Werkstücks 12 und ein möglichst ideales Erreichen der Sollkonturkurve 18 zu ermöglichen, müssen beim erstmaligen Schärfen und auch beim Nachschärfen des Werkzeugs 10 derartige Abweichungen der Schneiden 26 von ihrer Sollposition berücksichtigt werden. Hier setzt das im Folgenden beschriebene Verfahren an.

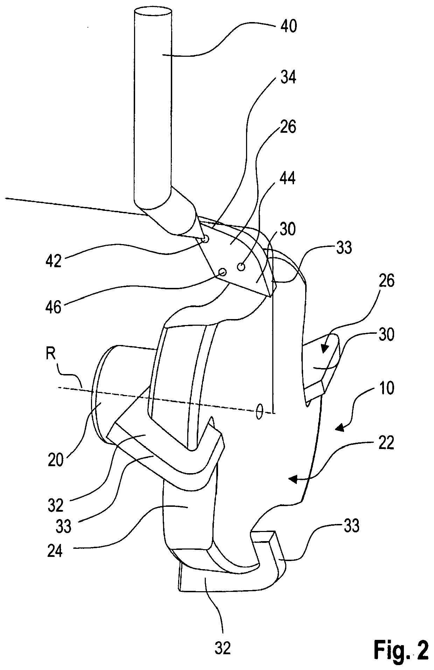

Betrachtet man Figur 2, so erkennt man das in Figur 1 in der Bearbeitungssituation gezeigte Werkzeug 10 beim Vermessen. Dabei erkennt man, wie die einzelnen Schneiden 26 im Schneidenträger 22 angeordnet sind. Jede Schneide 26 weist eine Spanfläche 30 auf, die in einer Bearbeitungssituation vorläuft und für die Spanbildung sorgt, eine Schneidplatten-Rückenfläche 32, die in einer Bearbeitungssituation nachläuft, eine Freifläche 33 und eine Schneidkante 34, die in einer Bearbeitungssituation sozusagen den bezüglich der Rotationsachse R radial äußersten Bereich der Bearbeitung definiert. Der Verlauf der Schneidkante 34 und die Lage der Schneide 26 relativ zum Schneidenträger 32 sind maßgeblich für das Bearbeitungsergebnis im Werkstück 12 (siehe Figur 1).

Mit dem erfindungsgemäßen Verfahren wird für jede Schneide 26 zunächst deren Lage im Raum relativ zum Schneidenträger 22 und dessen Achse R erfasst. Hierzu werden mit einem Messtaster 40 zumindest drei Oberflächenpunkte 42, 44, 46 erfasst. Dabei ist darauf hinzuweisen, dass diese drei Oberflächenpunkte 42, 44, 46 nicht auf der Schneidkante 34 liegen, sondern auf der Spanfläche 30. Ferner dürfen die drei Oberflächenpunkte 42, 44, 46 nicht auf einer Geraden liegen, sondern müssen im Dreieck angeordnet sein. Aus den drei Oberflächenpunkten 42, 44, 46 lässt sich dann eine Ebene ermitteln, die den Verlauf einer virtuellen Ebene der Schneide 26 im Raum und damit relativ zum Schneidenträger 22 und dessen Rotationsachse R wiedergibt. Dies kann für jede der Schneiden 26 wiederholt werden, so dass sich für jede der Schneiden 26 eine virtuelle Schneidenebene bestimmen lässt, die Auskunft über die Lage der jeweiligen Schneide 26 im Raum und damit relativ zum Schneidenträger 22 und dessen Rotationsachse R wiedergibt. Die virtuelle Schneidenebene kann also durch einfache Dreipunktmessung und Ermittlung der durch diese drei Oberflächenpunkte definierten Ebene im Raum bestimmt werden.

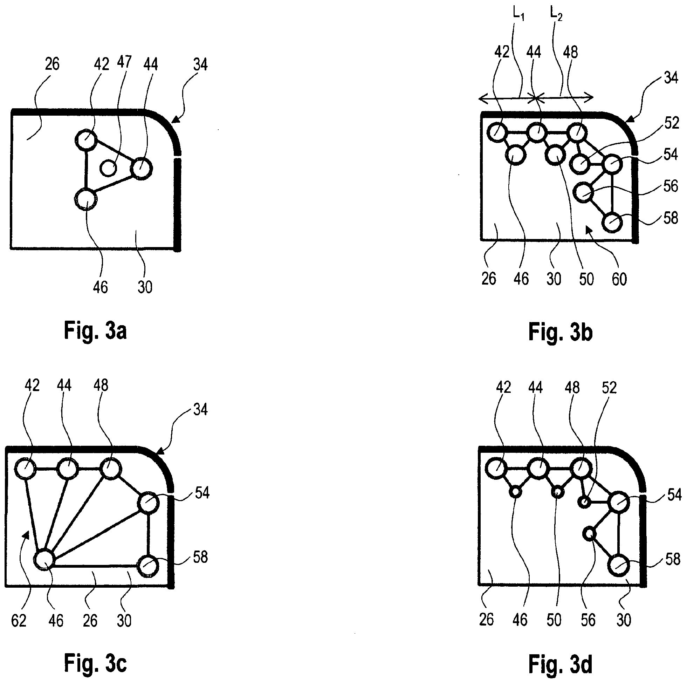

Figuren 3a bis 3c zeigen verschiedene Möglichkeiten, wie auf einer Spanfläche 30 einer Schneide 26 verschiedene Oberflächenpunkte angeordnet sein können. So zeigt beispielsweise Figur 3a die Erfassung von drei Oberflächenpunkten 42, 44, 46 auf der Spanfläche 30 der Schneide 26, wie etwa in Figur 2 gezeigt. Mit einem vierten Messpunkt 47, der vorzugsweise innerhalb des Messdreiecks liegt, z.B. im Dreieckschwerpunkt, kann eine Verifikation der Messung erfolgen. Unter der Annahme einer planaren Fläche kann ein Messfehler erkannt werden, der z.B. aus einer Verunreinigung der Schneidenoberfläche resultiert, oder es kann eine Wölbung der Schneidplatte erfasst werden.

Wenn nun eine starke Wölbung erkannt wird, so kann die Messung erweitert werden, indem ein sogenanntes Messband an Punkten erfasst wird, wie es Figur 3b zeigt. Dabei werden etwa entlang der Schneidkante 34 der Schneide 26 die Oberflächenpunkte 42, 44, 48, 54, 58 mit dem Messtaster 40 erfasst. Zusätzlich werden die Punkte 46, 50, 52, 56 erfasst. Daraus ergibt sich ein Messband 60 mit insgesamt, in diesem Beispiel, vier aufeinander folgenden Dreiecken. Bestimmten Oberflächenpunkten, vorzugweisen den Punkten 42, 44, 48, 54 und 58, d.h. den der Kontur am nächsten liegenden und dieser zugeordneten gemessenen Punkten, lassen sich einzelne Längenabschnitte der Gesamtlänge L der Kontur der Schneidkante 34 zuweisen. Beispielsweise ist der Längenabschnitt L₁ aus Fig. 3b den Punkten 42, 44 zugewiesen und der Längenabschnitt L₂ den Punkten 44 und 48, etc. Dadurch kann definiert werden, welches Messdreieck für welchen Teil der Kontur gültig ist. Für die Weiterverarbeitung der Messdreiecke wird die Schneidplatte in diesen einzelnen kleinen Teilbereichen L₁, L₂, etc. als planar angenähert.

Für die messtechnische Erfassung des Messbandes gemäß Fig. 3b sind relativ viele Messpunkte notwendig. Die Anzahl der Messpunkte kann durch verschiedene Anordnungen und weitere Nutzung der Messpunkte, wie z.B. bei einer Fächermessung oder ähnliche Messungen, reduziert werden. Fig. 3c zeigt eine so genannte Fächermessung, bei der wiederum entlang der Schneidkante 34 die Oberflächenpunkte 42, 44, 48, 54, 58 und zusätzlich zu diesen ein weiterer Oberflächenpunkt 46 über den Messtaster 40 erfasst werden, und sich so ein Fächer 62 aus in diesem Beispiel insgesamt vier Dreiecken ergibt. Die weitere Bearbeitung erfolgt in gleicher Weise, wie vorstehend mit Bezug auf Figuren 3b und 3a beschrieben.

Schließlich zeigt Figur 3d eine Abtastmessung, bei der die Oberflächenpunkte 42, 44, 48, 54, 58 taktil über den Messtaster 40 erfasst und die weiteren Punkte 46, 50, 52, 56 mathematisch bestimmt werden. Die mathematische Berechnung kann z.B. so aussehen, dass ein gleichschenkliges Dreieck entsteht und der jeweilige Berechnungspunkt 46, 50, 52, 56 in Bezug auf die Rotationsachse (nicht eingezeichnet) und den zugehörigen gemessenen Punkten (z.B. 42 und 44) auf einer Winkelhalbierenden liegt. Dieses Messprinzip kommt der traditionellen Messung sehr nahe, profitiert jedoch in der Weiterbearbeitung von einigen Vorteilen des neuen Messprinzips.

Geht man nun davon aus, dass man mit einer der vorstehend beschriebenen Vorgehensweisen die virtuelle Schneidenebene jeder einzelnen Schneide 26 im Raum relativ zum Schneidenträger 22, und gegebenenfalls noch Zusatzinformationen hierzu, ermittelt hat, so ist es in der Folge erforderlich, aus dieser Information über die virtuelle Schneidenebene auf den korrekten Verlauf der Schneidkante 34 zu schließen. Dies erfolgt gemäß der vorliegenden Erfindung in Abhängigkeit davon, wo eine zu bestimmende Schneidkante 34 oder ein zu bestimmter Schneidkantenabschnitt der Schneidkante 34 relativ zur Rotationsachse R liegt.

### Abwicklungsmodus:

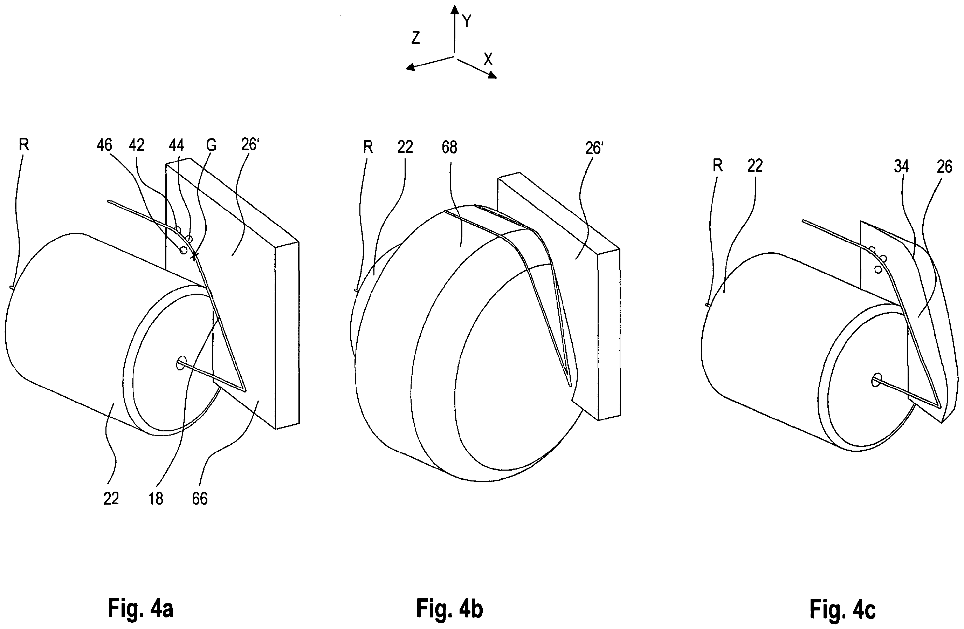

Geht man in einer weiteren Annahme davon aus, dass die zu bestimmende Schneidkante 34 oder der zu bestimmende Schneidkantenabschnitt in hinreichendem radialem Abstand von der Rotationsachse R liegt, wobei das Maß des hinreichenden radialen Abstands durch einen später noch näher zu erläuternden Grenzwert g (axialer Abstand eines Grenzpunkts G) bestimmt wird, so erfolgt die Bestimmung der Schneidkante 34 gemäß der Vorgehensweise, wie sie in den Figuren 4a bis 4c gezeigt ist. Diese Figuren zeigen die Vorgehensweise in dem so genannten "Abwicklungsmodus".

Wie vorstehend beschrieben, wird zunächst mit einer Messung der drei Oberflächenpunkte 42, 44, 46 eine virtuelle Schneidenebene ermittelt, die in Figur 4a mit dem Bezugszeichen 66 versehen ist. Diese virtuelle Schneidenebene 66 repräsentiert eine in Figur 4a zunächst in ihrer Kontur unbestimmte und daher beispielhaft im wesentlichen quadratisch eingezeichnete virtuelle Schneide 26', die entsprechend der ermittelten Lage im Schneidenträger 22 angeordnet ist. Diese beispielhafte Kontur ist ohne weitere Bedeutung.

Die Schneidenkontur, d.h. der Verlauf der Schneidkante 34, ist zunächst noch nicht bekannt. Um in der Folge die Schneidenkontur, d.h. den Verlauf der Schneidkante 34, im Abwicklungsmodus ermitteln zu können, wird relativ zur Rotationsachse R des Schneidenträgers 22 die Soll-Konturkurve 18 in der Orientierung eingetragen, wie sie später bei entsprechenden Einsatz des Werkzeugs in dem Werkstück im Rahmen eines Bearbeitungsverfahrens erreicht werden soll. Hierzu wird auf Figur 1 verwiesen.

Da sich das Werkzeug mit dem Schneidenträger 22 während der Bearbeitung um die Rotationsachse R dreht, um im Werkstück schließlich einen bearbeiteten Bereich mit einem Materialabtrag entsprechend der Soll-Konturkurve 18 zu erreichen (siehe Fig. 1), wird dann in einem nächsten Schritt entsprechend Figur 4b eine umhüllende Mantelfläche 68 durch virtuelles Drehen der Soll-Konturkurve 18 um die Rotationsachse R erzeugt. Diese umhüllende Mantelfläche 68 ist durch die Soll-Konturkurve 18 bestimmt, die bei einer Rotation des Werkzeugs 10 zum Erzielen eines idealen Bearbeitungsergebnisses gemäß Figur 1 bei der Bearbeitung des Werkstücks 12 erreicht werden soll. Diese umhüllende Mantelfläche 68 wird mit der virtuellen Schneide 26' geschnitten, wobei die Schnittfläche zwischen der umhüllende Mantelfläche 68 und der virtuellen Schneide 26' die Außenkontur und damit die Schnittkante 34 der Schneide 26 bestimmt. Dies ist in Figur 4c gezeigt.

Bei dem Abwicklungsmodus gemäß der vorliegenden Erfindung wird also die Außenkontur und damit die Schneidkante 34 der Schneide 26 nach Maßgabe der umhüllenden Mantelfläche 68 erzeugt. Diese Abwicklungsmodus lässt sich allerdings nur für Schneidenkonturen oder Schneidenkonturabschnitte anwenden, die in hinreichendem radialem Abstand (>g) von der Rotationsachse R liegen. Als Grenzwert wird hier beispielsweise der Punkt G auf der Soll-Konturkurve 18 gewählt, der in einem Grenzabstand g von der Rotationsachse R liegt. Alle Schneidenkonturen oder Schneidenkonturabschnitte, die radial außerhalb dieses Grenzabstands g liegen, lassen sich mit dem Abwicklungsmodus unter Berücksichtigung der umhüllenden Mantelfläche 68 mit hinreichender Genauigkeit erfassen. Schneidenkonturen oder Schneidenkonturabschnitte, die allerdings radial innerhalb dieses Grenzabstands g liegen, also in betragsmäßig geringerem radialen Abstand (<g) zu der Rotationsachse R liegen, lassen sich mit dem Abwicklungsmodus unter Berücksichtigung der umhüllenden Mantelfläche erfahrungsgemäß nicht hinreichend genau bestimmen. Derartige radial weiter innen liegende Schneidenkonturen oder Schneidenkonturabschnitte sind üblicherweise am Schneidenträger 22 stirnseitig angeordnet und werden mit dem im Folgenden beschriebenen "Stirnmodus" ermittelt.

### Stirnmodus:

Auch im Stirnmodus wird zunächst die Lage der virtuellen Schneide 26' durch Ermittlung der virtuellen Schneidenebene 66 erfasst, wobei die Schneidenkontur noch unbestimmt ist. Die Erfassung erfolgt wiederum durch die Ermittlung der drei Oberflächenpunkte 42, 44, 46. Zur Vermeidung von Wiederholungen wird auf die vorstehende Schilderung verwiesen.

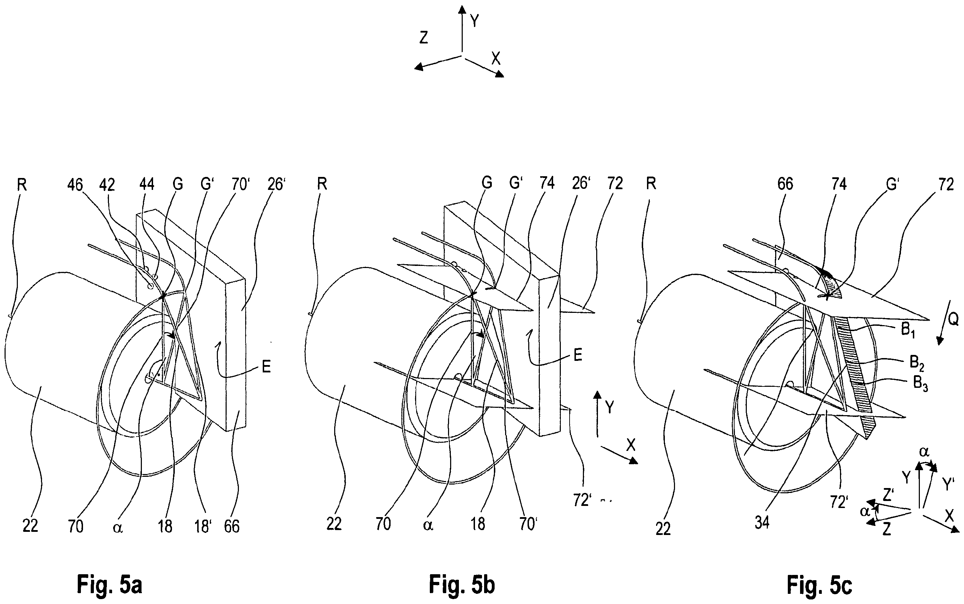

In einem nächsten Schritt wird, wie in Figur 5a gezeigt, an dem Grenzpunkt G ein virtueller Hilfsvektor 70 bestimmt, der orthogonal zu der Rotationsachse R verläuft. Dieser Hilfsvektor 70 wird sodann um die Rotationsachse R derart weit um den Winkel α gedreht, bis der Grenzpunkt G in der ermittelten virtuellen Schneidenebene 66 liegt. Dieser Punkt ist in Fig. 5a mit G' bezeichnet. Der gedrehte Grenzpunkt G' liegt also auf der virtuellen Schneidenebene 66. Dieser gedrehte Grenzpunkt G' ist zugleich der Berührpunkt oder Schnittpunkt zwischen der virtuellen Schneidenebene 66 und der entsprechend weit um den Winkel α gedrehten Soll-Konturkurve 18'.

In diesem gedrehten Grenzpunkt G' wird in einem nächsten Schritt orthogonal zu dem gedrehten Hilfsvektor 70' eine virtuelle Hilfsfläche 72 bestimmt. Sodann wird eine Schnittgerade 74 zwischen der virtuellen Hilfsfläche 72 und der virtuellen Schneidenebene E bestimmt. Auf dieser Schnittgeraden 74 liegt der aktuelle Bearbeitungspunkt der zu bestimmenden Schneidenkontur, im Ausgangsfall der Punkt G'. Als "Bearbeitungspunkt" wird in diesem Zusammenhang ein Punkt der Schneidenkontur 34 verstanden, der bei einer Bearbeitung der Schneide erhalten und für diese genutzt werden soll. Der aktuelle Bearbeitungspunkt bestimmt sich anhand des X-Werts der Sollkonturkurve bezüglich ihres aktuellen Y-Werts in einem vorher festgelegten, dem Werkzeug 10 fest zugeordneten Koordinatensystem. In diesem Koordinatensystem fällt vorzugsweise die X-Achse mit der Rotationsachse R zusammen, die weiteren Achsen Y' und Z' des Koordinatensystems sind in Fig. 5c angedeutet.

Um die weiteren Bearbeitungspunkte der Schneidenkontur 34 im Stirnmodus zu erhalten, beispielsweise die in Fig. 5c eingetragenen Bearbeitungspunkte B1, B2, B3, wird nun die virtuelle Hilfsfläche 72 entlang des gedrehten Normalenvektors 70' in entsprechend gedrehter Y-Richtung entlang der gedrehten Sollkonturkurve 18' auf die Rotationsachse R zu und gegebenenfalls in radialer Richtung über diese hinaus in gleicher Richtung verlagert, sofern dies, wie in diesem Beispiel gezeigt, durch die definierte Soll-Konturbahn vorgegeben ist. Dies ist in Figur 5c durch den Pfeil Q wiedergegeben. Schließlich ist in Fig. 5c noch die virtuelle Hilfsfläche 72' eingezeichnet, die die Rotationsachse R enthält.

Bei jedem Verlagerungsschritt der virtuellen Hilfsfläche in Y-Richtung entlang der gedrehten Sollkonturkurve 18' auf die Rotationsachse R (und die virtuelle Hilfsfläche 72') zu und gegebenenfalls in radialer Richtung über diese hinaus, gemäß den Vorgaben der gedrehten Sollkonturkurve 18', wird die aktuelle Schnittgerade zwischen der gerade verlagerten (aktuellen) virtuellen Hilfsfläche 72 und der virtuellen Schneidenebene 66 neu bestimmt. Der gesuchte Bearbeitungspunkt befindet sich auf dieser neu bestimmten Schnittgeraden und resultiert ferner aus der X-Komponente der gedrehten Sollkonturkurve 18'.

Verlagerungsschritte erfolgen beispielsweise immer um einen Zehntel Millimeter entlang der Länge (L) der gedrehten Sollkonturkurve 18'. Aus jedem L ergeben sich aus der Sollkonturkurvendefinition die entsprechenden X-Y-bzw. X-Y'-Koordinaten. Die Definition über die Länge L ist notwendig, da gewisse komplexe Konturen ansonsten nicht eindeutig sind, da bei komplexen Konturengeometrien, z.B. bei einer geschlossenen Kontur, für eine X-Koordinate mehrere Y-Koordinaten und umgekehrt gegeben sein können.

Auf diese Weise kann schrittweise Bearbeitungspunkt für Bearbeitungspunkt und damit schließlich die Schneidenkante 34 auch radial innerhalb des Grenzpunkts G ermittelt werden, selbst wenn diese mit Mittenversatz verläuft.

Wie bereits erläutert, wird im Abwicklungsmodus der Verlauf der Soll-Kontur im rotativ-linearen Prozess im Material abgebildet. Analog dazu würde sich im Stirnmodus der Verlauf der Soll-Kontur in einem virtuellen, rein linearen Prozess entlang der Z'-Koordinate, gemäß Figur 5c, im Material abbilden.

Durch eine Kombination des Abwicklungsmodus und des Stirnmodus lassen sich also beliebige Schneidenkonturen unabhängig von ihrer Relativlage zu der Rotationsachse bestimmen. Je nach Anordnung der Schneidenkonturen kann es in Einzelfällen auch ausreichen, nur eine Bestimmung nach dem Abwicklungsmodus oder nach dem Stirnmodus durchzuführen.

Die Besonderheit des erfindungsgemäßen Verfahrens liegt darin, dass mit nur wenigen Messungen unter Berücksichtigung des Sollkonturverlaufs eine präzise Bestimmung der Schneidenkontur möglich ist.

## Patentansprüche

1. Verfahren zum Erfassen von Geometriedaten von auf einem Schneidenträger (22) angeordneten Schneiden (26) eines Bearbeitungswerkzeugs, wobei die Geometriedaten zur Schneidenbearbeitung, insbesondere zum Schärfen der Schneiden (26) verwendet werden,
wobei der Schneidenträger (22) eine Rotationsachse (R) aufweist, um die der Schneidenträger (22) zur Bearbeitung von Werkstücken drehantreibbar ist,
wobei an einem Umfangsbereich des Schneidenträgers (22) eine Mehrzahl von im wesentlichen planaren Schneiden (26) angebracht ist, die von dem Schneidenträger (22) in radialer oder/und axialer Richtung vorstehen und jeweils eine nach radial außen oder/und nach axial weisende Freifläche (33) aufweisen, die von einer Schneidkante (34) begrenzt ist,
wobei die Schneidkanten (33) der Schneiden (26) eine gemeinsame, den Schneidenträger (22) umhüllende Mantelfläche definieren, wobei die umhüllende Mantelfläche in einer die Rotationsachse (R) des Schneidenträgers (22) enthaltenden Schnittebene eine Soll-Konturkurve (18, 18') abbildet, umfassend die Schritte:
A) Bestimmen wenigstens dreier Oberflächenpunkte (42, 44, 46) auf der im wesentlichen planaren Oberfläche (30) einer zu erfassenden Schneide (26), wobei die Oberflächenpunkte (42, 44, 46) nicht auf einer gemeinsamen Gerade liegen;
B) Ermitteln einer Schneidenebene (E) aus den in Schritt A) ermittelten wenigstens drei Oberflächenpunkten (42, 44, 46); und
C) Berechnen des Verlaufs der Schneidkante (34) entlang der in Schritt B) ermittelten Schneidenebene (E) unter Berücksichtigung der Soll-Konturkurve (18, 18').

2. Verfahren nach Anspruch 1,
**dadurch gekennzeichnet, dass** in Schritt A) die wenigstens drei Oberflächenpunkte (42, 44, 46) taktil oder optisch erfasst werden.

3. Verfahren nach Anspruch 1 oder 2,
**dadurch gekennzeichnet, dass** zu der in Schritt B) ermittelten Schneidenebene (E) relativ zu wenigstens einem der Oberflächenpunkte (42, 44, 46) ein Normalenvektor ermittelt wird.

4. Verfahren nach Anspruch 3,
**dadurch gekennzeichnet, dass** anhand des Normalenvektors Schneideninformationen bestimmbar sind, insbesondere die Lage einer Spanfläche (Brust) (30) der Schneide (26), die Lage des Rückens der Schneide (32), die Gültigkeit der in Schritt A) ermittelten Oberflächenpunkte (42, 44, 46), der Längenabschnitt auf der Soll-Konturkurve (18, 18').

5. Verfahren nach einem der vorangehenden Ansprüche,
**dadurch gekennzeichnet, dass** die Soll-Konturkurve (18, 18') in Form von CAD-Bearbeitungsdaten vorliegt.

6. Verfahren nach einem der vorangehenden Ansprüche,
**gekennzeichnet durch** den folgenden Schritt:
Berechnen des Verlaufs der Schneidkante (34) in Schritt C) **dadurch, dass** die Schneidenebene (E) mit der umhüllende Mantelfläche geschnitten wird, wobei die Schnittlinie zum Ermitteln der Schneidkante verwendet wird.

7. Verfahren nach Anspruch 6 ,
**gekennzeichnet durch** die folgenden Schritte:
D) Bestimmen eines virtuellen Hilfsvektors (70) an einem vorbestimmten virtuellen Bearbeitungspunkt (G) der Soll-Konturkurve (18, 18'), wobei der virtuelle Hilfsvektor (70) von dem vorbestimmten virtuellen Bearbeitungspunkt (G) der Soll-Konturkurve (18) ausgehend orthogonal zur Rotationsachse (R) ausgerichtet ist
E) Drehen des virtuellen Hilfsvektors (70) derart, dass der virtuelle Bearbeitungspunkt (G') der Soll-Konturkurve (18) auf der virtuellen Schneidenebene (E) liegt
F) Bestimmen einer virtuellen Konstruktionsfläche (72) orthogonal zu dem gedrehten virtuellen Hilfsvektor (70') in dem virtuellen Bearbeitungspunkt (G') der gedrehten Soll-Konturkurve (18') auf der virtuellen Schneidenebene (E),
G) Bestimmen einer Schnittgeraden (74) zwischen der in Schritt B) bestimmten Schneidenebene (E) und der in Schritt F) bestimmten virtuellen Konstruktionsfläche (72), und
H) Ermitteln eines aktuellen Bearbeitungspunktes (G') auf der Schnittgeraden (74) anhand eines ausgewählten Koordinatenwertes der gedrehten Sollkonturkurve (18').

8. Verfahren nach Anspruch 7,
**gekennzeichnet durch** die folgenden Schritte:
I) Ermitteln weiterer Punkte der Schneidkante (34) durch virtuelles Verlagern der virtuellen Konstruktionsebene (72) entlang des gedrehten virtuellen Hilfsvektors (70'), wobei nach einer virtuellen Verlagerung die Schritte durchgeführt werden:
J) Bestimmen einer Schnittgeraden (74) zwischen der in Schritt B) bestimmten Schneidenebene (E) und der verlagerten virtuellen Konstruktionsfläche (72), und
K) Ermitteln eines aktuellen Bearbeitungspunktes (B₁, B₂, B₃) auf der Schnittgeraden (74) anhand eines ausgewählten Koordinatenwertes der gedrehten Sollkonturkurve (18').

9. Verfahren nach Anspruch 7 oder 8,
**dadurch gekennzeichnet, dass** die Schritte D) bis H) und insbesondere die Schritte D) bis K) bei Unterschreiten eines vorbestimmten radialen Abstandes (g) des Bearbeitungspunkts oder der Bearbeitungspunkte von der Rotationsachse (R) angewandt werden.

10. Verfahren nach einem der vorangehenden Ansprüche,
**dadurch gekennzeichnet, dass** eine Vielzahl von Oberflächenpunkten (42, 44, 46) ermittelt wird, wobei die Oberflächenpunkte (42, 44, 46) in Form eines Messbandes oder eines Fächers auf der Schneidenoberfläche (30) angeordnet sind.

11. Verfahren nach einem der vorangehenden Ansprüche,
**dadurch gekennzeichnet, dass** zunächst zwei Oberflächenpunkte gemessen werden, wobei ein dritter Oberflächenpunkt zwischen den zwei erfassten Oberflächenpunkten auf einer vorzugsweise winkelhalbierenden Ebene zur Rotationsachse (R) berechnet wird.

12. Verfahren nach einem der vorangehenden Ansprüche,
**dadurch gekennzeichnet, dass** bei einer Erfassung von mehr als drei Oberflächenpunkten einzelne Oberflächenpunkte oder jeder weitere Oberflächenpunkt einer Verfifizierung unterzogen werden bzw. wird.

13. Verfahren nach einem der vorangehenden Ansprüche,
**dadurch gekennzeichnet, dass** bei einer Erfassung von mehr als drei Oberflächenpunkten eine Schneidenwölbung bestimmbar ist.

14. Computergesteuerte Bearbeitungsvorrichtung, insbesondere Mehrachsbearbeitungsmaschine, mit einer Steuerung in der das Verfahren nach einem der vorangehenden Ansprüche implementiert ist.

## Claims

1. A method for detecting geometric data of cutters (26) of a machining tool situated on a cutter support (22), the geometric data being used for cutter machining, in particular for sharpening the cutters (26),
wherein the cutter support (22) has a rotational axis (R) about which the cutter support (22) is rotationally drivable for machining workpieces,
wherein mounted on a circumferential area of the cutter support (22) is a plurality of essentially planar cutters (26) which protrude from the cutter support (22) in the radial and/or axial direction, and which in each case have a radially outwardly and/or axially pointing free face (33) that is delimited by a cutting edge (34),
wherein the cutting edges (33) of the cutters (26) define a shared circumferential surface that envelops the cutter support (22), wherein the enveloping circumferential surface in a section plane containing the rotational axis (R) of the cutter support (22) depicts a setpoint contour curve (18, 18'), comprising the steps:
A) determining at least three surface points (42, 44, 46) on the essentially planar surface (30) of a cutter (26) to be detected, wherein the surface points (42, 44, 46) do not lie on a common straight line;
B) ascertaining a cutter plane (E) from the at least three surface points (42, 44, 46) determined in step A); and
C) calculating the curve of the cutting edge (34) along the cutter plane (E) ascertained in step B), taking the setpoint contour curve (18, 18') into account.

2. The method according to Claim 1,
**characterized in that** the at least three surface points (42, 44, 46) are tactilely or visually detected in step A).

3. The method according to Claim 1 or 2,
**characterized in that** a normal vector relative to at least one of the surface points (42, 44, 46) is determined for the cutter plane (E) ascertained in step B).

4. The method according to Claim 3,
**characterized in that** cutter information, in particular the position of a cutting face (front face) (30) of the cutter (26), the position of the back of the cutter (32), the validity of the surface points (42, 44, 46) ascertained in step A), and the length section on the setpoint contour curve (18, 18') are determinable based on the normal vector.

5. The method according to one of the preceding claims,
**characterized in that** the setpoint contour curve (18, 18') is present in the form of CAD machining data.

6. The method according to one of the preceding claims,
**characterized by** the following step:
calculating the curve of the cutting edge (34) in step C) by intersecting the cutter plane (E) with the enveloping circumferential surface, the section line being used for ascertaining the cutting edge.

7. The method according to Claim 6,
**characterized by** the following steps:
D) determining a virtual auxiliary vector (70) at a predetermined virtual machining point (G) of the setpoint contour curve (18, 18'), wherein the virtual auxiliary vector (70), starting from the predetermined virtual machining point (G) of the setpoint contour curve (18), is oriented orthogonally with respect to the rotational axis (R),
E) rotating the virtual auxiliary vector (70) in such a way that the virtual machining point (G') of the setpoint contour curve (18) lies on the virtual cutter plane (E),
F) determining a virtual structural surface (72) that is orthogonal with respect to the rotated virtual auxiliary vector (70') in the virtual machining point (G') of the rotated setpoint contour curve (18') on the virtual cutter plane (E),
G) determining an intersection line (74) between the cutter plane (E) determined in step B) and the virtual structural surface (72) determined in step F), and
H) ascertaining a current machining point (G') on the intersection line (74), based on a selected coordinate value of the rotated setpoint contour curve (18').

8. The method according to Claim 7,
**characterized by** the following steps:
I) ascertaining additional points of the cutting edge (34) by virtually displacing the virtual structural plane (72) along the rotated virtual auxiliary vector (70'), wherein after a virtual displacement the following steps are carried out:
J) determining an intersection line (74) between the cutter plane (E) determined in step B) and the displaced virtual structural surface (72), and
K) ascertaining a current machining point (B₁, B₂, B₃) on the intersection line (74), based on a selected coordinate value of the rotated setpoint contour curve (18').

9. The method according to Claim 7 or 8,
**characterized in that** steps D) through H) and in particular steps D) through K) are applied when the distance falls below a predetermined radial distance (g) of the machining point or the machining points from the rotational axis (R).

10. The method according to one of the preceding claims,
**characterized in that** a plurality of surface points (42, 44, 46) is ascertained, wherein the surface points (42, 44, 46) are situated on the cutter surface (30) in the form of a measuring strip or a fan.

11. The method according to one of the preceding claims,
**characterized in that** two surface points are initially measured, wherein a third surface point between the two detected surface points on a preferably bisector plane with respect to the rotational axis (R) is calculated.

12. The method according to one of the preceding claims,
**characterized in that** individual surface points or any additional surface point are/is subjected to a verification when more than three surface points are detected.

13. The method according to one of the preceding claims,
**characterized in that** a cutter curvature is determinable when more than three surface points are detected.

14. A computer-controlled machining device, in particular a multiaxial machining unit, having a controller in which the method according to one of the preceding claims is implemented.

## Revendications

1. Procédé pour détecter des données géométriques de plaquettes (26) disposées sur un porte-plaquettes (22) d'un outil d'usinage, les données géométriques étant utilisées pour usiner les plaquettes, notamment pour affûter les plaquettes (26),
dans lequel le porte-plaquettes (22) présente un axe de rotation (R) autour duquel le porte-plaquettes (22) peut être entraîné en rotation pour l'usinage de pièces,
dans lequel une pluralité de plaquettes (26) sensiblement planes est montée sur une zone circonférentielle du porte-plaquettes (22), lesquelles font saillie du porte-plaquettes (22) dans la direction radiale et/ou axiale et présentent chacune une face de dépouille (33) orientée radialement vers l'extérieur et/ou axialement, qui est limitée par une arête de coupe (34),
dans lequel les arêtes de coupe (33) des plaquettes (26) définissent une surface extérieure commune enveloppant le porte-plaquettes (22), la surface extérieure enveloppante représentant, dans un plan de coupe contenant l'axe de rotation (R) du porte-plaquettes (22), une courbe de contour de consigne (18, 18'), le procédé comprenant les étapes suivantes :
A) détermination d'au moins trois points de surface (42, 44, 46) sur la surface sensiblement plane (30) d'une plaquette (26) à détecter, les points de surface (42, 44, 46) n'étant pas situés sur une droite commune ;
B) détermination d'un plan de plaquette (E) à partir desdits au moins trois points de surface (42, 44, 46) déterminés à l'étape A) ; et
C) calcul du tracé de l'arête de coupe (34) le long du plan de plaquette (E) déterminé à l'étape B) en tenant compte de la courbe de contour de consigne (18, 18').

2. Procédé selon la revendication 1,
**caractérisé en ce qu'**à l'étape A), lesdits au moins trois points de surface (42, 44, 46) sont détectés tactilement ou optiquement.

3. Procédé selon la revendication 1 ou 2,
**caractérisé en ce qu'**un vecteur normal au plan de plaquette (E) déterminé à l'étape B) est déterminé relativement à au moins un des points de surface (42, 44, 46).

4. Procédé selon la revendication 3,
**caractérisé en ce que** le vecteur normal permet de déterminer des informations de plaquette, notamment la position d'une face de coupe (devant) (30) de la plaquette (26), la position du dos de la plaquette (32), la validité des points de surface (42, 44, 46) déterminés à l'étape A), la section longitudinale sur la courbe de contour de consigne (18, 18').

5. Procédé selon l'une des revendications précédentes,
**caractérisé en ce que** la courbe de contour de consigne (18, 18') existe sous la forme de données d'usinage en CAO.

6. Procédé selon l'une des revendications précédentes,
**caractérisé par** l'étape suivante :
calcul du tracé de l'arête de coupe (34) à l'étape C) en coupant le plan de plaquette (E) par la surface extérieure enveloppante, la ligne de coupe étant utilisée pour déterminer l'arête de coupe.

7. Procédé selon la revendication 6,
**caractérisé par** les étapes suivantes :
D) détermination d'un vecteur auxiliaire virtuel (70) à un point d'usinage virtuel prédéterminé (G) de la courbe de contour de consigne (18, 18'), le vecteur auxiliaire virtuel (70) étant orienté orthogonalement à l'axe de rotation (R) en partant du point d'usinage virtuel prédéterminé (G) de la courbe de contour de consigne (18),
E) rotation du vecteur auxiliaire virtuel (70) de telle sorte que le point d'usinage virtuel (G') de la courbe de contour de consigne (18) se situe sur le plan de plaquette virtuel (E),
F) détermination d'une surface de construction virtuelle (72) orthogonale au vecteur auxiliaire virtuel tourné (70') au point d'usinage virtuel (G') de la courbe de contour de consigne tournée (18') sur le plan de plaquette virtuel (E),
G) détermination d'une droite de coupe (74) entre le plan de plaquette (E) déterminé à l'étape B) et la surface de construction virtuelle (72) déterminée à l'étape F), et
H) détermination d'un point d'usinage actuel (G') sur la droite de coupe (74) à l'aide d'une valeur de coordonnée sélectionnée de la courbe de contour de consigne tournée (18').

8. Procédé selon la revendication 7,
**caractérisé par** les étapes suivantes :
I) détermination d'autres points de l'arête de coupe (34) par déplacement virtuel du plan de construction virtuel (72) le long du vecteur auxiliaire virtuel tourné (70'), les étapes suivantes étant exécutées après un déplacement virtuel :
J) détermination d'une droite de coupe (74) entre le plan de plaquette (E) déterminé à l'étape B) et la surface de construction virtuelle déplacée (72), et
K) détermination d'un point d'usinage actuel (B₁, B₂, B₃) sur la droite de coupe (74) à l'aide d'une valeur de coordonnée sélectionnée de la courbe de contour de consigne tournée (18').

9. Procédé selon la revendication 7 ou 8,
**caractérisé en ce que** les étapes D) à H) et notamment les étapes D) à K) sont appliquées lorsque la distance radiale (g) entre le point d'usinage ou les points d'usinage et l'axe de rotation (R) devient inférieure à une valeur prédéterminée.

10. Procédé selon l'une des revendications précédentes,
**caractérisé en ce qu'**une pluralité de points de surface (42, 44, 46) est déterminée, les points de surface (42, 44, 46) étant disposés sous la forme d'une bande de mesure ou d'un éventail sur la surface de plaquette (30).

11. Procédé selon l'une des revendications précédentes,
**caractérisé en ce que** deux points de surface sont d'abord mesurés, un troisième point de surface étant calculé entre les deux points de surface détectés sur un plan de préférence bissecteur par rapport à l'axe de rotation (R).

12. Procédé selon l'une des revendications précédentes,
**caractérisé en ce qu'**en cas de détection de plus de trois points de surface, certains points de surface ou tout point de surface supplémentaire sont/est soumis à une vérification.

13. Procédé selon l'une des revendications précédentes,
**caractérisé en ce qu'**en cas de détection de plus de trois points de surface, il est possible de déterminer une courbure de plaquette.

14. Dispositif d'usinage commandé par ordinateur, notamment une machine d'usinage multiaxes, équipé d'une commande dans laquelle le procédé est mis en oeuvre selon l'une des revendications précédentes.
